# EUROPÄISCHE PATENTSCHRIFT

(11) **EP 3 954 579 B1**
(45) Veröffentlichungstag und Bekanntmachung des Hinweises auf die Patenterteilung: **22.04.2026**
(21) Anmeldenummer: 21187135.5
(22) Anmeldetag: 22.07.2021
(51) Int. Cl.: B60Q 1/24, B60Q 1/12, B60J 3/00, B62D 47/02, B60R 21/02, B60R 21/12

(54) **REFLEXIONSREDUZIERENDES SCHUTZSYSTEM FÜR FAHRER EINES REISE- ODER LINIENBUSSES**
REFLECTION-REDUCING PROTECTION SYSTEM FOR DRIVERS OF A TOUR OR LINE BUS
SYSTÈME DE PROTECTION À RÉFLEXION RÉDUITE POUR LES CONDUCTEURS D'AUTOBUS DE TOURISME OU D'AUTOBUS

(30) Priorität: 14.08.2020 DE 102020121452
(43) Veröffentlichungstag der Anmeldung: 16.02.2022
(73) Patentinhaber: Kiesel, Erhard, 71334 Waiblingen (DE)
(72) Erfinder: Kiesel, Erhard, 71334 Waiblingen (DE)
(74) Vertreter: Witte, Weller & Partner Patentanwälte mbB

(56) Entgegenhaltungen:
- EP-A1- 3 378 708
- CN-U- 211 166 792
- DE-A1- 102006 058 118
- JP-A- H03 197 248
- JP-U- S61 117 747
- US-A- 5 428 512
- US-A1- 2009 273 941
- US-B1- 7 032 946

## Beschreibung

Die vorliegende Offenbarung betrifft einen Bus mit einem reflexionsreduzierendes Schutzsystem für einen Fahrer sowie ein Verfahren zum Installieren eines derartigen Schutzsystems in einem Bus.

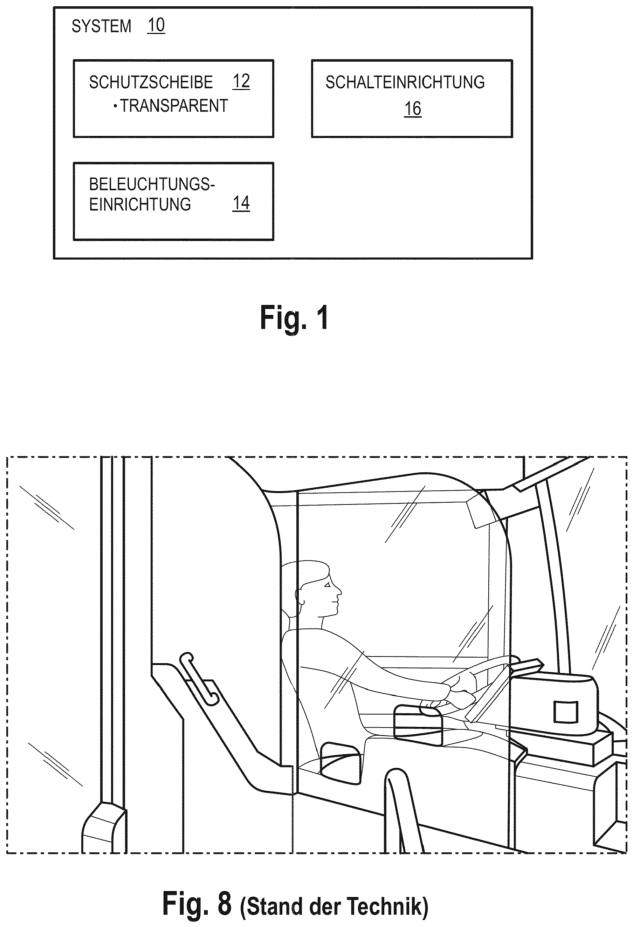

Zum Schutz von Busfahrern sind Schutzscheiben bekannt, die ein (Fahrer-) Bereich, wo der Busfahrer zum Lenken des Busses sitzt, von einem (Fahrgast-) Einstiegbereich trennen, wo Fahrgäste (seitlich) in den Bus einsteigen und am Busfahrer vorbeilaufen, um kontrolliert zu werden und ggf. Tickets zu kaufen. Diese herkömmlichen Schutzscheiben erstrecken sich in einer vertikal orientierten Ebene, vorzugsweise im Wesentlichen parallel zur Fahrtrichtung des Busses, und trennen den Fahrer im vordersten Bereich des Busses physisch von den ein- und aussteigenden Fahrgästen, vgl. Fig. 8. Zu diesem Zweck können die Schutzscheiben partiell mit einer oder mehreren (kleinen) Durchgriffsöffnungen versehen sein, um z.B. den Austausch von Geld und Fahrscheinen zwischen dem Fahrer und den Passagieren zu ermöglichen.

Die Schutzscheiben sind üblicherweise so dimensioniert und positioniert, dass handgreifliche Übergriffe seitens der Passagiere auf den Fahrer nicht möglich sind. Die Schutzscheiben schützen gegen Diebstahl und Überfälle.

Die Schutzscheiben ermöglichen ferner die Implementierung eines Hygienekonzepts innerhalb von Reise- und Linienbussen, insbesondere in Zeiten der Covid-19-Pandemie. Die Schutzscheiben ermöglichen das Einhalten eines Mindestabstands zwischen dem Fahrer und den Fahrgästen. Die Schutzscheiben gewährleisten eine Eindämmung von sich ausbreitenden Aerosolen, aber auch einen generellen Schutz vor Viren, z.B. in den Wintermonaten.

Eine derartige Scheibe ist auf der Internetseite beschrieben, die unter "https://media.daimler.com/marsMediaSite/de/instance/picture.xhtml?oid=46295165" abrufbar ist.

Die herkömmlichen Schutzscheiben werden aus unterschiedlichen Materialien hergestellt, wie z.B. aus Sicherheitsglas oder transparentem Kunststoff. Ein Problem bei derartigen Schutzscheiben stellen Spiegeleffekte dar. Spiegel- bzw. Reflexionseffekte auf der Schutzscheibe verschlechtern die Sicht des Fahrers durch die Schutzscheibe. Dies bedeutet, dass die Schutzscheiben in bestimmten Situationen nicht zu 100 % transparent sind und die Sicht des Fahrers durch Objekte gestört werden kann, die durch eine Spiegelung auf der fahrerzugewandten Fläche der Scheibe abgebildet werden. Der Fahrer sieht vermeintlich Gegenstände durch die Schutzscheibe, die sich tatsächlich gar nicht hinter der Scheibe befinden, sondern durch Spiegeleffekte abgebildet werden. Es besteht die Gefahr einer optischen Täuschung. Diese gespiegelten Gegenstände befinden sich tatsächlich auf der gleichen Seite der Schutzscheibe wie der Fahrer. Dennoch bekommt der Fahrer den Eindruck, dass die Gegenstände auf der anderen Seite der Scheibe positioniert sind.

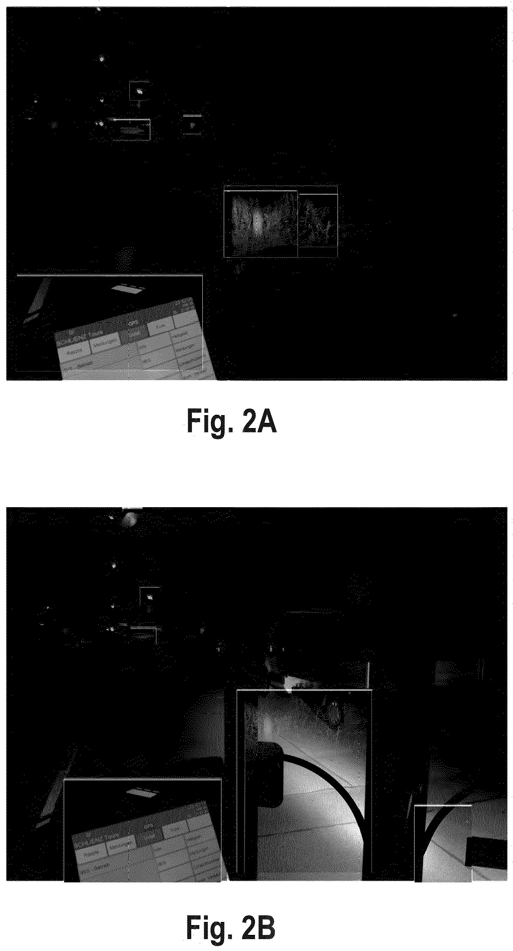

Bei Nacht treten diese nachteiligen Spiegeleffekte, insbesondere die optische Täuschung, noch deutlicher in Erscheinung, vgl. auch Fig. 2A. Das Fahr- bzw. Abblendlicht des Busses beleuchtet z.B. Gegenstände auf der linken Seite des Busses, wobei das von diesen Gegenständen reflektierte Licht auf der (Trenn-) Schutzscheibe derart gespiegelt wird, dass der Fahrer den Eindruck hat, dass sich der reflektierende Gegenstand auf der rechten Seite des Busses befindet. Dieser (Täuschungs-)Effekt ist besonders beim Abbiegen (nach rechts) nachteilig, weil der links sitzende Fahrer denkt, dass sich ein Gegenstand auf der rechten Seite befindet, wohin der Bus abbiegen will, obwohl dieser Gegenstand sich dort gar nicht befindet, oder weil der Fahrer durch die überlagerte Reflexion echte Gegenstände nicht oder nur unzureichend sieht, die aber tatsächlich auf der rechten Seite vorhanden sind, wohin der Bus abbiegt. Diese Effekte treten nachts stärker als tagsüber in Erscheinung.

Besonders problematisch sind diese Effekte, wenn der Fahrer zusätzlich zum reflektierten Licht durch fremde Lichtquellen geblendet wird, die von außen reflektierend auf die Schutzscheibe strahlen. Unter dem Begriff "Blendung" ist nachfolgend eine optische oder visuelle Störung zu verstehen, die durch eine überhohe Helligkeit verursacht wird. Die überhohe Helligkeit führt zu einer Überforderung des optischen bzw. visuellen Systems, insbesondere der Augen des Busfahrers. Eine Blendung kann durch das Fahr- bzw. Abblendlicht eines entgegenkommenden Fahrzeugs verursacht werden.

Deshalb ist es bereits bekannt, die Schutzscheiben zu entspiegeln. Die Entspiegelung kann einseitig oder beidseitig erfolgen. Die Entspiegelung reduziert die optische Täuschung für den Fahrer. Scheiben können z.B. durch Bedampfung mit Metalloxiden entspiegelt werden, was tagsüber recht gut funktioniert. Alternativ ist es möglich, die Scheibe mit einer zusätzlich aufgeklebten Folie zu entspiegeln. Diese Maßnahmen reichen aber nicht aus, die optischen Täuschungen insbesondere nachts sicher auszuschließen.

Das Dokument DE 100 58 903 A1 betrifft eine Beleuchtungsanordnung für ein Kraftfahrzeug mit Leuchteinheiten zur Ausleuchtung der Umgebung des Kraftfahrzeugs, um die Sicht eines in einer Fahrgastzelle des Kraftfahrzeugs befindlichen Fahrzeuginsassen während der Fahrt zu verbessern . Es ist vorgesehen, dass sich mindestens eine Leuchteinheit zur Bildung eines Leuchtbereichs vorgesehen und eingerichtet ist, der sich in Fahrzeuglängsrichtung betrachtet seitlich neben dem Kraftfahrzeug zumindest entlang eines Teiles der Fahrgastzelle erstreckt.

Das Dokument DE 10 2010 046 515 A1 betrifft einen Omnibus mit einer Tür und einer Einstiegsleiste, die bei geschlossener Tür unterhalb einer Unterkante eines Türblattes der Tür und parallel zu dieser Unterkante verläuft. Eingebaut in die Einstiegsleiste ist eine Beleuchtungsvorrichtung zur Beleuchtung einer Einstiegumgebung, die sich neben dem Omnibus unterhalb der Tür befindet.

Das Dokument US 2009/ 273 941 A1 eine externe Sicherheitsbeleuchtung für einen Bus, wobei das Licht in einem Spiegelarm angebracht ist.

Das Dokument US 7 032 946 B1 betrifft einen Barriereschild für einen Bus.

Es ist eine Aufgabe, ein Schutzsystem für einen Fahrer eines Reise- oder Linienbusses bereitzustellen, das optische Täuschungen so gut wie möglich verhindert, insbesondere bei Nacht. Ferner ist es auch eine Aufgabe, einen entsprechend eingerichteten Bus bereitzustellen sowie ein Verfahren zum Installieren des Schutzsystems in den Bus bereitzustellen.

Diese Aufgabe wird gelöst durch einen Bus gemäß Anspruch 1.

Der Beleuchtungsbereich, der durch die Beleuchtungseinrichtung erzeugt wird, bewirkt, dass ausreichend Licht von außen auf die Schutzscheibe projiziert wird, so dass Licht auf der dem Fahrer zugewandten Seite der Schutzscheibe nicht in Richtung des Fahrers reflektiert werden kann bzw. in einem sehr verringerten Maße reflektiert wird. Die optische Täuschung wird auf diese Weise deutlich reduziert und bestenfalls eliminiert.

Der Fahrer wird von dem Extralicht nicht geblendet. Eine Blendung durch externe Lichtquellen wird minimiert.

Busse besitzen üblicherweise einen Rampen- oder Weitwinkelspiegel, die dem Fahrer eine Sicht in den toten Bereich ermöglichen sollen. Durch das Extralicht kann auch dieser tote Bereich erhellt werden und eventuelle Gefahren sichtbar gemacht werden.

Vorzugsweise weist das Schutzsystem ferner eine Schalteinrichtung auf, die eingerichtet ist, die Beleuchtungseinrichtung basierend auf einem Signal zu aktivieren und zu deaktivieren, das einen oder mehrere der folgenden Zustände darstellt: eine Überschreitung eines vordefinierten Lenkwinkels; eine Aktivierung eines Fahrrichtungsanzeigers oder einer Aktivierung eines Abbiegelichts.

Die oben genannten Zustände sind indikativ für einen Abbiegevorgang, bei dem die optische Täuschung in Erscheinung treten kann, weil der Fahrer zwingend durch die Schutzscheibe blicken muss. Eine Kenntnis dieser Zustände wird genutzt, um die optische Täuschung zu eliminieren. Diese Zustände werden mitunter auch bereits heute schon in Busen erfasst. Somit müssen keine gesonderten Sensoren verbaut werden.

Das Schutzsystem lässt sich als Nachrüstbausatz ausgestalten. Das Schutzsystem ist einzeln handelbar.

Vorzugsweise ist die Beleuchtungseinrichtung eingerichtet, an oder in dem Bus montiert zu werden.

Die Montage erfolgt vorzugsweise an oder in der Seitenwand des Busses.

Die Seitenwand bietet ausreichend Orte zur Installation der Beleuchtungseinrichtung, ohne bestehende Bestandteile und deren Funktionsweise zu stören.

Die Montage kann auch an, in oder über der Einstiegtür erfolgen.

Selbstverständlich kann die Beleuchtungseinrichtung auch innerhalb des Busses, vorzugsweise im Fahrgast-Einstiegbereich, angebracht werden, wobei auf die Ausrichtung in dem Außenbereich des Busses zu achten ist.

Die Montage ist einfach und kann nachträglich erfolgen. Die Montage muss von keinem besonders geschulten Personal ausgeführt werden.

Ferner ist es von Vorteil, wenn sich der Beleuchtungsbereich in der Längsrichtung des Busses im Wesentlichen entlang einer gesamten Länge einer Einstiegstür des Busses, und insbesondere bis zu einem Radkasten des Busses, erstreckt.

Diese Länge stellt sicher, dass der Bereich, in den der Fahrer beim Abbiegen blickt, sicher ausgeleuchtet ist, so dass in diesem Bereich der Schutzscheibe, durch den der Fahrer blickt, keine oder nur minimale Reflexionseffekte mehr auftreten können.

Außerdem kann dieses Licht als Einstiegshilfe benutzt werden, wenn Fahrgäste ein- und aussteigen. Ferner unterstützt sie den Fahrer beim Anfahren an eine Haltestelle, indem sie eine sichere Orientierung gewährleistet.

Insbesondere sind der Beleuchtungsbereich und ein von einem Abbiegelicht des Busses ausgeleuchteter Bereich im Wesentlichen überlappungsfrei.

Der Beleuchtungsbereich ist also in einem Bereich vorgesehen, der nicht vom regulären Abbiegelicht, sofern dieses überhaupt vorhanden ist, abgedeckt ist. Das Abbiegelicht leuchtet den Fahrweg besser aus. Der Beleuchtungsbereich liegt den Blick auf Gefahren frei, die außerhalb des Fahrwegs lauern können.

Der Beleuchtungsbereich erstreckt sich bis in einen Winkelbereich relativ zur Fahrrichtung hinein, der größer als 90° + n° ist, wobei n eine ganze Zahl zwischen 0 und 45 ist.

Der Beleuchtungsbereich erstreckt sich also hinter die Vorderkante des Busses in einen Bereich, der üblicherweise nicht durch das Fahrlicht und/oder das Abbiegelicht ausgeleuchtet wird. So ist sichergestellt, dass die optische Täuschung eliminiert wird, weil dies den Bereich darstellt, in den der Fahrer durch die Schutzscheibe beim Abbiegen blickt.

In einer weiteren besonderen Ausgestaltung ist die Fahr- und Sitzposition in einer Längsrichtung des Busses zwischen der Vorderkante und einer Längsachse des Busses positioniert. Die Fahr- und Sitzposition ist insbesondere durch den Fahrersitz definiert.

Dies verdeutlicht die ungewöhnliche Positionierung des Fahrers relativ zur Lenkachse, die bei herkömmlichen Pkw genau umgekehrt ist, d.h. der Fahrer sitzt bei einem Pkw hinter der Lenkachse. Diese ungewöhnliche Positionierung resultiert in einem Überhang des Busfahrers relativ zur Lenkachse. Dieser Überhang wiederum ruft außergewöhnliche Lenkbewegungen beim Abbiegen des Busses hervor, die sogar in die gegenüberliegende Fahrbahn reichen können, wo sich der Gegenverkehr befindet.

Vorzugsweise schließt sich der Beleuchtungsbereich außerhalb des Busses unmittelbar an den Einstiegbereich an.

Damit ist sichergestellt, dass auch untere Bereich der Schutzscheibe frei von optischen Täuschungen sind.

Vorzugsweise ist der Bus ein Reise- oder Linienbus.

Ferner wird die Aufgabe durch ein Verfahren zum Installieren eines reflexionsreduzierenden Schutzsystems gemäß Anspruch 10 gelöst.

Auf diese Weise lassen sich die oben bereits erwähnten Vorteile erzielen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen, welcher nur durch die beigefügten Ansprüche begrenzt ist.

Ausführungsbeispiele sind in den Zeichnungen dargestellt und werden in der nachfolgenden Beschreibung näher erläutert. Es zeigen:
- Fig. 1: ein Blockdiagramm eines Schutzsystems;
- Fig. 2: ein Sichtfeld eines Busfahrers ohne Extralicht (Fig. 2A) und mit Extralicht (Fig. 2B);
- Fig. 3: eine Seitenansicht eines schematisch dargestellten (Linien-) Busses;
- Fig. 4: eine gebrochene Draufsicht des Busses der Fig. 3;
- Fig. 5: eine Veranschaulichung eines Fahrlichts, eines Abbiegelichts und eines Extralichts;
- Fig. 6: eine Veranschaulichung eines Sichtfelds;
- Fig. 7: ein Flussdiagramm zum Installieren des System der Fig. 1 in einem Bus; und
- Fig. 8: eine perspektivische Darstellung einer Einbausituation einer herkömmlichen Trennscheibe in einem Linienbus.

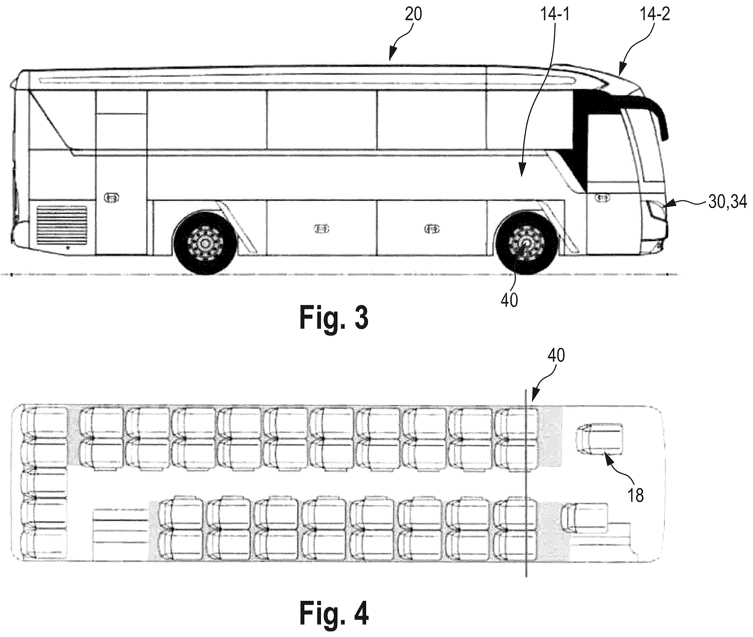

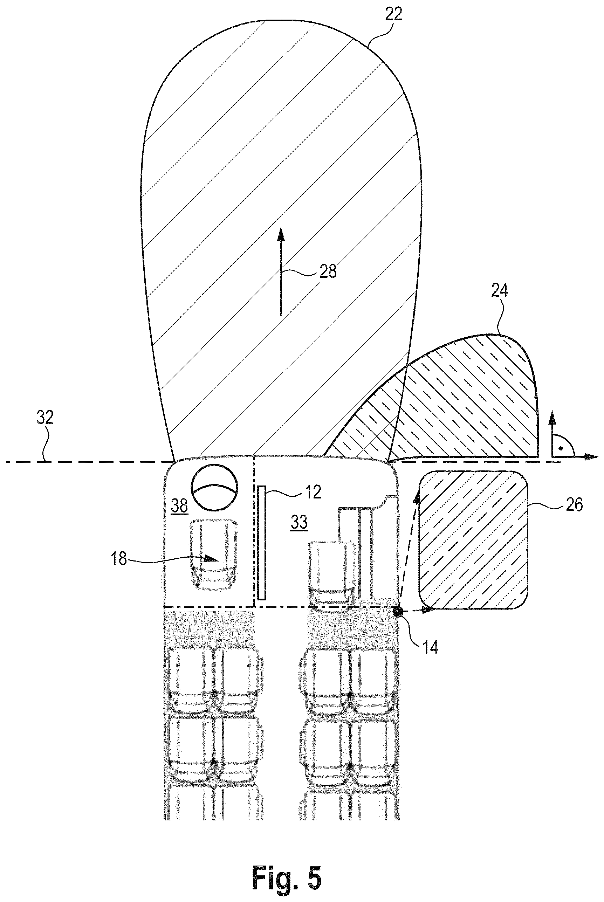

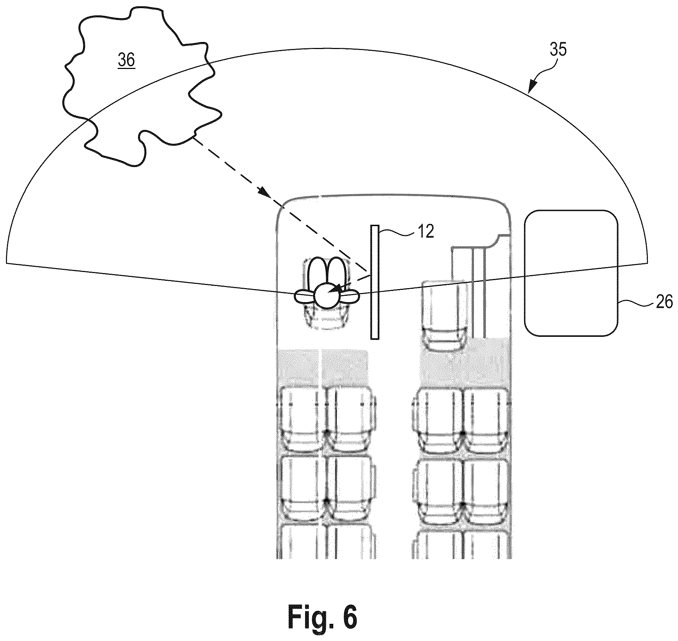

Fig. 1 zeigt ein Blockdiagramm eines Schutzsystems (nachfolgend auch kurz bezeichnet als "System") 10 für einen Fahrer eines Reisebusses (vgl. Fig. 5 und 6) oder eines Linienbusses, der in den Figuren 3 (Seitenansicht) und 4 (Draufsicht) schematisch dargestellt ist.

Das Schutzsystem 10 der Fig. 1 umfasst eine Schutzscheibe bzw. Scheibe 12 und eine Beleuchtungseinrichtung 14. Optional umfasst das System 10 eine Schalteinrichtung 16.

Das System 10 dient dazu, den Fahrer vor täuschenden Reflexionen (optische Täuschung), insbesondere bei Nacht, zu schützen, die der Fahrer in der seitlich zu einer Fahr- und Sitzposition 18 (vgl. Fig. 5) angeordneten Scheibe 12 sehen kann. Die Beleuchtungseinrichtung 14 beleuchtet einen seitlichen Außenbereich des Busses 20, der von einem normalen Fahrlicht 22 und Abbiegelicht 24 nicht ausgeleuchtet wird, so dass optische Täuschungen in der Scheibe 12 vermieden werden, indem Reflexionen in der Schutzscheibe 12 deutlich reduziert, und vorzugsweise vollständig vermieden, werden. Die Beleuchtungseinrichtung 14 erzeugt ein Extralicht 26 zusätzlich zum normalen Fahrlicht 22 und Abbiegelicht 24, vgl. Fig. 5.

Das Extralicht 26 stellt einen Beleuchtungsbereich der Beleuchtungseinrichtung 14 außerhalb des Busses 20 dar, der in einer Fahrtrichtung 28 des Busses 20 hinter einer Vorderkante 32 des Busses 20 und seitlich benachbart zu einem innen positionierten (Fahrgast-) Einstiegbereich 33 des Busses 20 positioniert ist.

In der Fig. 5 ist der vom Fahrlicht 22 ausgeleuchtete Bereich einfach schraffiert dargestellt. Der vom Abbiegelicht 24 ausgeleuchtete Bereich ist doppelt schraffiert dargestellt. Der vom Extralicht 26 ausgeleuchtete Bereich (Beleuchtungsbereich) ist dreifach schraffiert dargestellt.

Das Fahrlicht 22, das allgemein auch als Abblendlicht bezeichnet wird, dient zur Ausleuchtung einer Fahrbahn (in Fahrtrichtung 28, parallel zur Fahrzeuglängsachse) vor einem Fahrzeug sowie dazu, selbst gesehen zu werden. Um selbst gesehen zu werden, können die Scheinwerfer 30 (vgl. Fig. 3) von Fahrzeugen zusätzlich ein Standlicht umfassen, welches immer mitleuchtet und sicherstellt, dass das Fahrzeug (d.h. der Bus 20) bei Ausfall des Fahrlichtes 22 vom Gegenverkehr noch als solches erkannt wird.

Das Fahrlicht 22 leuchtet heutzutage bei Kraftfahrzeugen, insbesondere bei Bussen 20, die Fahrbahn in der Regel asymmetrisch aus. In Ländern mit Rechtsverkehr wird die rechte Seite stärker ausgeleuchtet, bei Linksverkehr die linke Seite. Dadurch werden entgegenkommende Fahrzeuge weniger geblendet, aber gleichzeitig ist der rechte Straßenrand für den Fahrer klar erkennbar, um Fußgänger, Radfahrer oder auch Wild am Fahrbahnrand früher wahrzunehmen. Trotz der asymmetrischen Ausleuchtung erstreckt sich der Lichtkegel im Wesentlichen parallel zur Fahrtrichtung 28, und zwar in einen zentralen Bereich des Busses 20 vor einer Vorderkante 32 des Busses 20, vgl. Strichlinie in Fig. 5. Vorliegend wird beispielhaft die Anordnung für den Rechtsverkehr erläutert. Es versteht sich das das hier Gesagte auch für Linksverkehr gilt, wobei die Anordnung der Elemente spiegelsymmetrisch erfolgt.

Zusätzlich zum Fahrlicht 22 (und Standlicht) gibt es ein optionales Kurvenlicht. Das Kurvenlicht, das auch als Abbiegelicht 24 bezeichnet wird, wird mit Fahrzeugscheinwerfern erzeugt, die im vorderen Bereich des Fahrzeugs vorgesehen sind und die bei einer Kurvenfahrt ihre Leuchtrichtung in Kurvenrichtung verändern (dynamisches Kurvenlicht) oder die beim Abbiegen oder bei Betätigung eines Fahrtrichtungsanzeigers (Blinker) 34 (vgl. Fig. 3) zugeschaltet werden (statisches Kurvenlicht). Dadurch wird insbesondere die Fahrsicherheit bei Dunkelheit durch ein verbessertes Ausleuchtungsfeld vor dem Bus 20 erhöht. Das Abbiegelicht 24 reicht bis in einen Winkelbereich von max. 90° relativ zur Fahrtrichtung 28 vor den Bus 20.

Fig. 2A zeigt bei Nacht einen Blick (Sichtfeld 35) aus der Fahr- und Sitzposition 18 (also vom Stuhl) des Fahrers in Fahrtrichtung 28 ohne Extralicht 26. Fig. 2B zeigt den gleichen Blick wie Fig. 2A, aber mit eingeschaltetem seitlichen Extralicht 26.

In Fig. 2A ist in einem rechten Teil des Gesichtsfelds des Fahrers die Reflexion eines Baums 36 deutlich zu erkennen, vgl. auch Fig. 6, der eigentlich auf der linken Seite des Busses 20 steht und durch zurückreflektiertes Fahrlicht 22 erzeugt wird. In Fig. 2B ist die Reflexion des Baums 36 deutlich abgeschwächt, weil das Extralicht 26 einen seitlichen Bereich außerhalb des Busses 20 beleuchtet, der die Reflexion auf der Scheibe 12 größtenteils eliminiert.

Unter dem "Gesichtsfeld" versteht man allgemein den Gesamtbereich, in dem (ohne Zuhilfenahme von Augenbewegungen) eine visuelle Wahrnehmung möglich ist. Nur innerhalb des zentralen Bereichs (Fovea) ist aber ein klares Erkennen möglich. Die Wahrnehmungsqualität hinsichtlich Sehschärfe, Mustererkennung und Farbsehen sinkt, je peripherer die visuellen Reize liegen. Nachfolgend wird unter dem "Sichtfeld 35" der zentrale Bereich des Gesichtsfelds verstanden, wo die visuelle Wahrnehmung hauptsächlich stattfindet. Das Sichtfeld 35 ist in Fig. 6 für den Fall veranschaulicht, dass der Fahrer auf dem Fahrersitz (Fahr- und Sitzposition 18) sitzt, um den Bus 20 zu lenken.

Die Scheibe 12 trennt einen Fahrerbereich 38 vom Fahrgast-Einstiegbereich 33. Die Bereiche 33 und 38 sind in Fig. 5 durch strichpunktierte Linien angedeutet. Der Fahrerbereich 38 und der Einstiegbereich 33 befinden sich im vordersten Bereich innerhalb des Busses 20, direkt im Anschluss an eine nicht näher bezeichnete Windschutzscheibe.

Die Schutzscheibe 12 verhindert, dass der Fahrer und einsteigende Fahrgäste (nicht dargestellt) in Kontakt kommen. Die Scheibe 12 verhindert eine unkontrollierte Ausbreitung von Aerosolen, was insbesondere in Zeiten von Covid-19 wichtig ist. Generell schützt die Scheibe 12 auch vor Viren, insbesondere in den Wintermonaten. Außerdem schützt die Scheibe 12 den Fahrer vor handgreiflichen Übergriffen durch die Fahrgäste.

Die Scheibe 12 ist aus einem transparenten Material, wie z.B. Kunststoff oder (Sicherheits-) Glas, gefertigt. Eine äußere Form der Scheibe 12 ist an die jeweilige Einbausituation angepasst. Die Einbausituation ist abhängig vom Fahrzeug- bzw. Bustyp. Die Scheibe 12 ist in den Fig. 5 und 6 (Reisebus) exemplarisch parallel zur Fahrtrichtung 28 ausgerichtet, und erstreckt sich im Wesentlichen in einer vertikalen Ebene. Es versteht sich, dass die Scheibe 12, oder auch nur Teile davon, leicht schräg zur Fahrtrichtung 28 orientiert sein können, insbesondere in einem Linienbus, wie er in den Fig. 3 und 4 dargestellt ist.

Die Scheibe 12 kann eine oder mehrere Öffnungen (nicht gezeigt) aufweisen, um den Austausch von Geld und Fahrscheinen zu gewährleisten.

Die Scheibe 12 kann entspiegelt sein, z.B. durch einen aufgedampften Nanolack. Die Entspiegelung hilft dem Fahrer insbesondere bei Tag durch die Scheibe 12 zu blicken, um den rechten Fahrbahnrand deutlich zu sehen. Ein (störungs-)freier Blick auf die rechte Fahrbahnseite ist insbesondere beim Abbiegen nach rechts erforderlich. Im Gegensatz zu gewöhnlichen Personenkraftfahrzeugen ist ein freier Blick nach rechts für Busfahrer besonders wichtig. Hier unterscheiden sich Busse 20 von gewöhnlichen Fahrzeugen durch eine relativ zum Fahrer nach hinten versetzte Position einer Lenkachse 40, vgl. Fig. 3 und 4. Der Radstand resultiert in einem Überhang nach vorn, den der Fahrer beim Rechtsabbiegen berücksichtigen muss. Der Fahrer muss weit in die Kreuzung hineinfahren und ggf. weit nach links in den Gegenverkehr ausholen, um auf der rechten Seite nicht zu kollidieren. Eine freie Sicht nach rechts ist essentiell.

Ohne das Extralicht 26 können sich nachts Gegenstände in der Scheibe 12 reflektieren, die den Eindruck vermitteln, dass sie auf der rechten Seite des Busses 20 positioniert sind, obwohl die Gegenstände tatsächlich auf der linken Seite positioniert sind, vgl. den Baum 36 in Fig. 6. Das Extralicht 26 hellt den Bereich hinter der Scheibe 12 für den Fahrer auf, d.h. macht die Scheibe 12 transparent.

Dieser Effekt ist zwar aus einem anderen Kontext bekannt. Sitzt man z.B. nachts in einem beleuchteten Raum, reflektieren die Fensterscheiben das Licht des Raums. Man hat den Eindruck, die Fensterscheiben seien Spiegel. Schaltet man aber eine Außenbeleuchtung ein, verlieren die Fensterscheiben ihre reflektierende Wirkung, weil das Außenlicht die Fensterscheiben von außen durchdringt und so das von innen reflektierte Licht entsprechend abschwächt. Je stärker das Außenlicht ist, desto weniger wird das Innenlicht reflektiert. Diesen Effekt nutzt die vorliegende Anwendung beim Abbiegen bei Nacht. Es wird Licht (d.h. das Extralicht 26) in einen Bereich projiziert, der vom regulären Fahrlicht 22 und Abbiegelicht 24 nicht ausgeleuchtet wird. Dieser Bereich liegt in Fahrtrichtung 28 hinter der Vorderkante 32 des Busses 20 seitlich zum Bus 20.

Das Extralicht 26 wird von der Beleuchtungseinrichtung 14 erzeugt. Die Beleuchtungseinrichtung 14 kann durch eine oder mehrere Lampen (z.B. LED) realisiert sein. Die Lampen können an einem oder mehreren Ort positioniert werden. In den Fig. 3 und 5 ist die Beleuchtungseinrichtung 14 exemplarisch oberhalb des Radkastens des Busses 20 angeordnet, vgl. 14-1 in Fig. 3. Der Lichtkegel (Beleuchtungsbereich) der Beleuchtungseinrichtung 14 ist in diesem Fall nach vorn in den Bereich gerichtet, wo die Fahrgäste zum Einsteigen in den Bus 20 stehen.

Es versteht sich, dass die Beleuchtungseinrichtung 14 auch oberhalb der Einstiegstür angeordnet werden kann, vgl. 14-2 in Fig. 3, oder an einem anderen Ort am oder im Bus 20 angeordnet werden kann, um das Extralicht 26 im Außenbereich des Busses 20 zu erzeugen. Es sollte vermieden werden, dass der Fahrer oder im Bus sitzende Gäste geblendet werden. Die Beleuchtungseinrichtung 14 wird vorzugsweise an oder in einer äußeren Seitenfläche des Busses 20 montiert.

Die Beleuchtungseinrichtung 14 kann auch in oder an der Tür des Busses 20 montiert sein.

Die Beleuchtungseinrichtung 14 kann punktuell oder länglich ausgebildet sein. Die Beleuchtungseinrichtung 14 kann z.B. ein Punktstrahler sein, der insbesondere über der Einstiegstür installiert ist und der einen Beleuchtungsbereich mit einem Durchmesser von z.B. 5m erzeugt.

Der Beleuchtungsbereich der Beleuchtungseinrichtung 14 erstreckt sich insbesondere in der Längsrichtung des Busses 20 im Wesentlich entlang einer gesamten Länge der Einstiegstür und vorzugsweise bis zum Radkasten des Busses 20.

Üblicherweise überlappen sich das Extralicht 26 und das Abbiegelicht 24 nicht, sind also überlappungsfrei.

Bei nur geringfügigen Überlappungen von z.B. 5-10% der Fläche des Beleuchtungsbereichs sind sie "im Wesentlichen überlappungsfrei". Es versteht sich, dass das Extralicht 26 in Abhängigkeit von Anbringungsort der Beleuchtungseinrichtung teilweise in den Bereich des Abbiegelichts 24 hinein leuchten kann. Primäre Funktion des Extralichts 26 ist aber, den Bereich seitlich zum Einstieg außerhalb des Busses 20 beleuchten, den der Fahrer bei einem Blick durch die Scheibe 12 sieht und der nicht vom normalen Abbiegelicht 24 ausgeleuchtet wird, aber dennoch zu einer optischen Täuschung führen könnte.

Der Beleuchtungsbereich der Beleuchtungseinrichtung 14 kann sich - im Vergleich zum Abbiegelicht 24 - bis in einen Winkelbereich relativ zur Fahrtrichtung 28 hinein erstrecken, der größer als 90° ist, vgl. Fig. 5. Dieser Winkelbereich ist insbesondere 90° + n°, wobei n eine ganze Zahl zwischen 0 und 45 ist. Dies bedeutet mit anderen Worten, dass der Beleuchtungsbereich klar außerhalb des herkömmlichen Abbiegelichts 24 liegen soll.

Ferner ist es möglich, den angestrebten Effekt auch mit dem Abbiegelicht 24 zu erreichen, indem man das Abbiegelicht 24 - im Vergleich zu einem herkömmlichen Abbiegelicht - einen Bereich ausleuchten lässt, der sich mit dem Beleuchtungsbereich (Extralicht 26) deckt. Dies kann z.B. dadurch erreicht werden, dass man ein dynamisches Abbiegelicht weiter als üblich auslenkt, um so auch die oben erwähnten Winkelbereiche abzudecken. Dies bedeutet mit anderen Worten, dass die Beleuchtungseinrichtung 14 auch durch einen bereits vorhandenen Scheinwerfer (vorzugsweise durch das Abbiegelicht) erzeugt werden kann.

Die Beleuchtungseinrichtung 14 kann durch die Schalteinrichtung 16 (vgl. Fig. 1) aktiviert und deaktiviert werden, die von einer Steuereinrichtung (nicht dargestellt) angesteuert wird. Die Schalteinrichtung 16 kann ein einfacher Schalter sein, der die Energiezufuhr zur Beleuchtungseinrichtung 14 regelt. Die Energie kommt üblicherweise von einer Energiequelle (Batterie, Lichtmaschine, etc.), die im Bus 20 bereits vorhanden ist. Die Energiequelle kann aber auch ein Bestandteil des Systems 10 sein.

Ein Signal, dass zur Aktivierung oder Deaktivierung der Beleuchtungseinrichtung 14 führt, kommt von einer Signalquelle, die üblicherweise ein bereits vorhandener Bestandteil des Busses 20 ist. Die Signalquelle kann das Steuergerät des Busses 20 sein. Alternativ kann das Steuergerät eigenständig sein. Das eigenständige Steuergerät (nicht dargestellt) kann dann wiederum ein Bestandteil des Systems 10 sein.

Als Signalquelle dient z.B. ein Lenkwinkelsensor, der ein Überschreiten eines vorbestimmten Lenkwinkels erfasst. Wenn der Fahrer in einer Rechtskurve einlenkt, wird das Extralicht 26 bei Erreichen eines vorbestimmten Lenkwinkels eingeschaltet. Die Abschaltung kann nach Ablauf einer gewissen Verzögerungszeit oder beim Zurücklenken erfolgen.

Alternativ oder ergänzend kann das Signal des Fahrrichtungsanzeigers 34 verwendet werden. Wenn der Fahrer beim Rechtsabbiegen den Blinker betätigt, kann das Extralicht 26 unabhängig vom Lenkwinkel eingeschaltet werden.

Alternativ oder ergänzend kann ein Signal zum Ein- und Ausschalten des Abbiegelichts 24 verwendet werden, mit dem das reguläre Abbiegelicht 24 ein- und ausgeschaltet wird.

Generell ist es empfehlenswert, das Extralicht 26 bei Geschwindigkeiten ab 40 km/h zu deaktivieren.

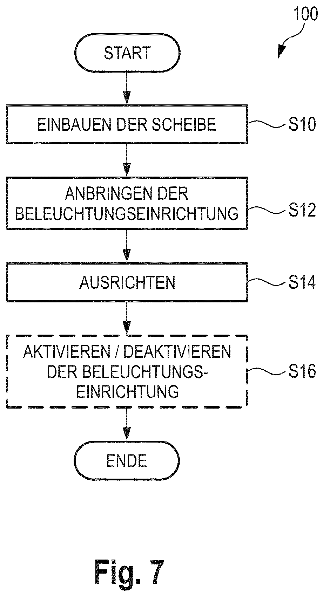

Fig. 7 zeigt ein Flussdiagramm 100 zum Installieren eines reflexionsreduzierenden Schutzsystems 10, das insbesondere nach der oben beschriebenen Art ausgebildet, in einen Reise- oder Linienbus 20, wie er exemplarisch in den Fig. 3 bis 6 gezeigt ist.

In einem ersten Schritt S10 wird eine Schutzscheibe 12 zwischen dem Fahrerbereich 38 und dem Einstiegbereich 33 eingebaut. Es versteht sich, dass die Schutzscheibe 12 an den Bus 20 angepasst ist, in welchem die Scheibe einzubauen ist. Dies betrifft insbesondere die Abmessungen und die Ausrichtung der Scheibe 12.

In einem weiteren Schritt S12 wird eine Beleuchtungseinrichtung 14 im oder am Bus 20 angebracht. Es können eine oder mehrere Beleuchtungseinrichtungen 14 angebracht werden. Die Beleuchtungseinrichtungen 14 werden vorzugsweise an Orten angebracht, die oben bereits erwähnt wurden. Insbesondere werden die Beleuchtungseinrichtungen 14 im vorderen seitlichen Bereich des Busses 20 angebracht, wie z.B. oberhalb und/oder seitlich zur Einstiegstür sowie oberhalb und/oder seitlich zum vorderen Radkasten.

In einem Schritt S14 erfolgt die Ausrichtung der Beleuchtungseinrichtung(en) 14 derart, dass ein Beleuchtungsbereich außerhalb des Busses beleuchtbar ist, der in der Fahrtrichtung 28 hinter der Vorderkante 32 des Busses 20 und seitlich benachbart zum Einstiegbereich 33 positioniert ist und der sich mit dem Teil eines Sichtfelds 35 des Fahrers überlappt, den der Fahrer durch die Schutzscheibe sieht, und der insbesondere nicht vom Abbiegelicht 24 ausgeleuchtet wird, wenn sich der Fahrer in der Fahr- und Sitzposition 18 befindet.

Auch wenn es in der Fig. 7 nicht explizit gezeigt ist, kann das Verfahren 100 ferner einen Schritt eines Vorsehens einer Schalteinrichtung 16 aufweisen, mit der die Beleuchtungseinrichtung(en) 14 ein- und ausgeschaltet wird bzw. werden. Das Signal zum Einschalten und Ausschalten bekommt die Schalteinrichtung 16 von dem oben erwähnten Steuergerät, das wiederum mit einem Lenksensor (nicht dargestellt), einem Fahrrichtungsanzeiger (nicht dargestellt) und/oder einem Abbiegelicht 24 in Verbindung steht. Sobald für das Steuergerät erkennbar ist, dass der Fahrer nach rechts abbiegen will, so dass die optische Täuschung eintreten kann, wird das Extralicht 26 eingeschaltet, insbesondere bei Nacht. Die Information, dass es dunkel ist, erhält das Steuergerät z.B. aus der Information, ob das Fahrlicht 22 ein- oder ausgeschaltet ist.

Selbstverständlich kann das Extralicht 26 auch tagsüber eingeschaltet werden, um immer sicherzustellen, dass keinerlei optische Täuschung eintreten kann. Bei einer Fahrt in einem Tunnel kann das Extralicht 26 hilfreich sein. Radfahrer, die sich im Seitenbereich aufhalten, könnten durch das Extralicht 26 vor einem Abbiegen des Busses 20 gewarnt werden.

Es versteht sich, dass das System 10 isoliert gehandelt und vertrieben werden kann, um später - auch als Nachrüst- oder Erweiterungsbausatz - in einen Bus 20 eingebaut zu werden.

## Patentansprüche

1. Bus (20) mit einem reflexionsreduzierenden Schutzsystem (10) für einen Fahrer des Busses (20), wobei das reflexionsreduzierende Schutzsystem (10) aufweist:
eine transparente Schutzscheibe (12), so dass eine Sicht des Fahrers durch Objekte störbar ist, die durch eine Spiegelung auf einer fahrerzugewandten Seite der Schutzscheibe (12) abgebildet werden, die der Fahrer vermeintlich durch die Schutzscheibe (12) sieht und die sich tatsächlich gar nicht auf einer fahrerabgewandten Seite der Schutzscheibe (12) befinden, sondern die sich tatsächlich auf der fahrerzugewandten Seite der Schutzscheibe (12) befinden, wobei die Schutzscheibe (12) eingerichtet ist, in dem Bus (20) einen Fahrerbereich (38) von einem Fahrgast-Einstiegbereich (33) zu trennen, wobei die Schutzscheibe (12) in einer im Wesentlichen vertikalen Ebene seitlich zu einer Fahr- und Sitzposition (18) des Fahrers angeordnet ist;
**gekennzeichnet durch**
eine Beleuchtungseinrichtung (14), die in einem vorderen seitlichen Bereich des Busses (20) am oder im Bus (209 angebracht ist und die eingerichtet ist, einen Beleuchtungsbereich (26) außerhalb des Busses (20) beim Fahren zu beleuchten, der in einer Fahrtrichtung (28) des Busses (20) hinter einer Vorderkante (32) des Busses (20) und seitlich benachbart zum Fahrgast-Einstiegbereich (33) positioniert ist und der sich mit dem Teil des Sichtfelds (35) des Fahrers überlappt, den der Fahrer durch die Schutzscheibe (12) sieht, wenn sich der Fahrer in der Fahr- und Sitzposition (18) befindet, wobei der Beleuchtungsbereich (26), der durch die Beleuchtungseinrichtung (14) erzeugt wird, bewirkt, dass ausreichend Licht von außen auf die Schutzscheibe (12) projiziert wird, so dass Reflexionen auf der fahrerzugewandten Seite der Schutzscheibe (12) verringert sind und eine durch die Reflexionen verursachte optische Täuschung auf diese Weise deutlich reduziert und bestenfalls eliminiert wird.

2. Bus (20) nach Anspruch 1, wobei das reflexionsreduzierende Schutzsystem (10) ferner eine Schalteinrichtung (16) aufweist, die eingerichtet ist, die Beleuchtungseinrichtung (14) basierend auf einem Signal zu aktivieren und zu deaktivieren, das einen oder mehrere der folgenden Zustände darstellt: eine Überschreitung eines vordefinierten Lenkwinkels, eine Aktivierung eines Fahrrichtungsanzeigers (34) oder eine Aktivierung eines Abbiegelichts (24).

3. Bus (20) nach Anspruch 1 oder 2, wobei die Beleuchtungseinrichtung (12) eingerichtet ist, am oder im Bus (20) montiert zu werden.

4. Bus (20) nach einem der Ansprüche 1 bis 3, wobei sich der Beleuchtungsbereich (26) in der Längsrichtung des Busses (20) im Wesentlichen entlang einer gesamten Länge einer Einstiegstür des Busses (20), und insbesondere bis zu einem Radkasten des Busses (20), erstreckt.

5. Bus (20) nach einem der Ansprüche 1 bis 4, wobei der Beleuchtungsbereich (26) und ein von einem Abbiegelicht (24) des Busses (20) ausgeleuchteter Bereich im Wesentlichen überlappungsfrei sind.

6. Bus (20) nach einem der Ansprüche 1 bis 5, wobei sich der Beleuchtungsbereich (26) bis in einen Winkelbereich relativ zur Fahrtrichtung (28) hinein erstreckt, der größer als 90° + n° ist, wobei n eine ganze Zahl zwischen 0 und 45 ist.

7. Bus (20) nach einem der Ansprüche 1 bis 6, wobei die Fahr- und Sitzposition (18) in einer Längsrichtung des Busses (20) zwischen der Vorderkante (32) und einer Lenkachse (40) des Busses (20) positioniert ist.

8. Bus (20) nach einem der Ansprüche 1 bis 7, wobei sich der Beleuchtungsbereich (26) außerhalb des Busses (20) unmittelbar an den Einstiegbereich (33) anschließt.

9. Bus (20) nach einem der Ansprüche 1 bis 8, der ein Reise- oder Linienbus ist.

10. Verfahren (100) zum Installieren eines reflexionsreduzierenden Schutzsystems (10) in einem Bus nach einem der Ansprüche 1 bis 9, wobei der Bus (20) einen Fahrerbereich (38) und einen Fahrgast-Einstiegbereich (33) im vordersten Bereich des Busses (20) aufweist, mit den Schritten:
Einbauen (S10) der transparenten, reflektierenden Schutzscheibe (12) zwischen dem Fahrerbereich (38) und dem Einstiegbereich (33), wobei die Schutzscheibe (12) so reflektierend ist, dass eine Sicht des Fahrers durch Objekte störbar ist, die durch eine Spiegelung auf einer fahrerzugewandten Seite der Schutzscheibe (12) abgebildet werden, die der Fahrer vermeintlich durch die Schutzscheibe (12) sieht und die sich tatsächlich gar nicht auf einer fahrerabgewandten Seite der Schutzscheibe (12) befinden, sondern die sich tatsächlich auf der fahrerzugewandten Seite der Schutzscheibe (12) befinden;
Anbringen (S12) einer Beleuchtungseinrichtung (14) in einem vorderen seitlichen Bereich des Busses (20) im oder am Bus (20); und
Ausrichten (S14) der Beleuchtungseinrichtung (14), so dass ein Beleuchtungsbereich (26) außerhalb des Busses (20) beleuchtet ist, der in der Fahrtrichtung (28) hinter einer Vorderkante (32) des Busses (20) und seitlich benachbart zum Einstiegbereich (33) positioniert ist und der sich mit dem Teil eines Sichtfelds (35) des Fahrers überlappt, den der Fahrer durch die Schutzscheibe (12) sieht, wenn sich der Fahrer in einer Fahr- und Sitzposition (18) befindet, wobei der Beleuchtungsbereich (26), der durch die Beleuchtungseinrichtung (14) erzeugt wird, bewirkt, dass ausreichend Licht von außen auf die Schutzscheibe (12) projiziert wird, so dass Reflexionen auf der fahrerzugewandten Seite der Schutzscheibe (12) verringert sind und eine durch die Reflexionen verursachte optische Täuschung auf diese Weise deutlich reduziert und bestenfalls eliminiert wird.

## Claims

1. A bus (20) with a reflection-reducing protective system (10) for a driver of the bus (20), wherein the reflection-reducing protective system (10) comprises:
a transparent protective screen (12) such that a view of the driver is disturbable by objects imaged by reflection on a driver-facing side of the protective screen (12), which the driver supposedly sees through the protective screen (12) and which are actually not located on a driver-averted side of the protective screen (12), but are actually located on the driver-facing side of the protective screen (12), wherein the protective screen (12) is configured to separate, in the bus (20), a driver area (38) from a passenger-entrance area (33), wherein the protective screen (12) is arranged in a substantially vertical plane laterally to a driving and sitting position (18) of the driver;
**characterized by**
an illumination device (14), which is mounted in a front lateral area of the bus (20) to or in the bus (20) and which is arranged to illuminate, during driving, an illumination area (26) outside the bus (20), which is positioned, in a traveling direction (28) of the bus (20), behind a front edge (32) of the bus (20) and laterally adjacent to the passenger-entrance area (33) and which overlaps with the part of the driver's field of view (35) that the driver sees through the protective screen (12) when the driver is in the driving and sitting position (18), wherein the illumination area (26), which is generated by the illumination device (14), causes sufficient light from outside to be projected onto the protective screen (12), so that reflections on the driver-facing side of the protective screen (12) are reduced and an optical illusion caused by the reflections is in this way significantly reduced, and at best eliminated.

2. The bus (20) of claim 1, wherein the reflection-reducing protective system (10) further comprises a switching device (16) configured to activate and deactivate the illumination device (14) based on a signal representing one or more of the following states: an exceeding of a predefined steering angle, an activation of a direction indicator (34), or an activation of a cornering light (24).

3. The bus (20) of claim 1 or 2, wherein the illumination device (12) is configured to be mounted to or in the bus (20).

4. The bus (20) of any one of claims 1 to 3, wherein the illumination area (26) extends in the longitudinal direction of the bus (20) substantially along an entire length of an entrance door of the bus (20), and in particular up to a wheel arch of the bus (20).

5. The bus (20) of any one of claims 1 to 4, wherein the illumination area (26) and an area illuminated by a cornering light (24) of the bus (20) are substantially non-overlapping.

6. The bus (20) of any one of claims 1 to 5, wherein the illumination area (26) extends into an angular range relative to the traveling direction (28) which is greater than 90° + n°, where n is an integer between 0 and 45.

7. The bus (20) of any one of claims 1 to 6, wherein the driving and sitting position (18) is positioned in a longitudinal direction of the bus (20) between the front edge (32) and a steering axle (40) of the bus (20).

8. The bus (20) of any one of claims 1 to 7, wherein the illumination area (26) outside the bus (20) directly adjoins the entrance area (33).

9. The bus (20) of any one of claims 1 to 8, which is a coach or city bus.

10. A method (100) of installing a reflection-reducing protective system (10) in a bus according to any one of claims 1 to 9, wherein the bus (20) comprises a driver area (38) and a passenger-entrance area (33) in the foremost area of the bus (20), including the steps:
installing (S10) the transparent reflecting protective screen (12) between the driver area (38) and the entrance area (33), wherein the protective screen (12) is so reflecting that a view of the driver is disturbable by objects that are imaged by reflection on a driver-facing side of the protective screen (12), which the driver supposedly sees through the protective screen (12) and which are actually not located on a driver-averted side of the protective screen (12), but are actually located on the driver-facing side of the protective screen (12);
mounting (S12) an illumination device (14) in a front lateral area of the bus (20) in or to the bus (20); and
aligning (S14) the illumination device (14) so that an illumination area (26) outside the bus (20) is illuminated, which is positioned in the traveling direction (28) behind a front edge (32) of the bus (20) and laterally adjacent to the entrance area (33) and which overlaps with the part of a driver's field of view (35) that the driver sees through the protective screen (12) when the driver is in a driving and sitting position (18), wherein the illumination area (26), which is generated by the illumination device (14), causes sufficient light from outside to be projected onto the protective screen (12) so that reflections on the driver-facing side of the protective screen (12) are reduced and an optical illusion caused by the reflections is in this way significantly reduced, and at best eliminated.

## Revendications

1. Bus (20) comportant un système de protection réduisant les réflexions (10) pour un conducteur du bus (20), dans lequel le système de protection réduisant les réflexions (10) présente :
une vitre de protection (12) transparente, de sorte qu'une vision du conducteur peut être perturbée par des objets qui sont représentés par un reflet sur un côté de la vitre de protection (12) tourné vers le conducteur, que le conducteur est supposé voir à travers la vitre de protection (12) et qui ne se trouvent en réalité pas sur un côté de la vitre de protection (12) opposé au conducteur, mais se trouvent en réalité sur le côté de la vitre de protection (12) tourné vers le conducteur, dans lequel la vitre de protection (12) est conçue pour séparer dans le bus (20) une zone de conducteur (38) d'une zone d'embarquement de passagers (33), dans lequel la vitre de protection (12) est disposée dans un plan sensiblement vertical latéralement par rapport à une position de conduite et d'assise (18) du conducteur ;
**caractérisé par**
un dispositif d'éclairage (14) qui est monté sur ou dans le bus (209) dans une zone latérale avant du bus (20) et qui est configuré pour éclairer une zone d'éclairage (26) à l'extérieur du bus (20) pendant la conduite, laquelle zone d'éclairage est positionnée dans une direction de déplacement (28) du bus (20) derrière un bord avant (32) du bus (20) et est latéralement adjacente à la zone d'embarquement de passagers (33) et chevauche la partie du champ de vision (35) du conducteur que le conducteur voit à travers la vitre de protection (12) lorsque le conducteur est dans la position de conduite et d'assise (18), dans lequel la zone d'éclairage (26) générée par le dispositif d'éclairage (14) agit de sorte qu'une lumière suffisante est projetée depuis l'extérieur sur la vitre de protection (12), de sorte que des réflexions sur le côté de la vitre de protection (12) tourné vers le conducteur sont réduites et qu'une illusion d'optique provoquée par les réflexions est ainsi considérablement réduite et, au mieux, éliminée.

2. Bus (20) selon la revendication 1, dans lequel le système de protection réduisant les réflexions (10) présente en outre un dispositif de commutation (16) qui est configuré pour activer et désactiver le dispositif d'éclairage (14) sur la base d'un signal représentant une ou plusieurs des états suivants : un dépassement d'un angle de braquage prédéfini, une activation d'un indicateur de direction de déplacement (34) ou une activation d'un phare adaptatif (24).

3. Bus (20) selon la revendication 1 ou 2, dans lequel le dispositif d'éclairage (12) est conçu pour être monté sur ou dans le bus (20).

4. Bus (20) selon l'une des revendications 1 à 3, dans lequel la zone d'éclairage (26) s'étend dans la direction longitudinale du bus (20) sensiblement sur toute une longueur d'une porte d'embarquement du bus (20), et en particulier jusqu'à un passage de roue du bus (20).

5. Bus (20) selon l'une des revendications 1 à 4, dans lequel la zone d'éclairage (26) et une zone éclairée par un phare adaptatif (24) du bus (20) ne se chevauchent sensiblement pas.

6. Bus (20) selon l'une des revendications 1 à 5, dans lequel la zone d'éclairage (26) s'étend jusque dans une plage angulaire par rapport à la direction de déplacement (28) supérieure à 90° + n°, dans lequel n représente un nombre entier compris entre 0 et 45.

7. Bus (20) selon l'une des revendications 1 à 6, dans lequel la position de conduite et d'assise (18) est positionnée dans une direction longitudinale du bus (20) entre le bord avant (32) et un axe de direction (40) du bus (20).

8. Bus (20) selon l'une des revendications 1 à 7, dans lequel la zone d'éclairage (26) à l'extérieur du bus (20) se raccorde directement à la zone d'embarquement (33).

9. Bus (20) selon l'une des revendications 1 à 8, lequel est un autocar ou un autobus de ligne.

10. Procédé (100) pour l'installation d'un système de protection réduisant les réflexions (10) dans un bus selon l'une des revendications 1 à 9, dans lequel le bus (20) présente une zone de conducteur (38) et une zone d'embarquement de passagers (33) dans la zone la plus avant du bus (20), comportant les étapes consistant à :
intégrer (S10) la vitre de protection (12) transparente et réfléchissante entre la zone de conducteur (38) et la zone d'embarquement (33), dans lequel la vitre de protection (12) est réfléchissante de sorte qu'une vision du conducteur peut être perturbée par des objets qui sont représentés par une réflexion sur un côté de la vitre de protection (12) tourné vers le conducteur, que le conducteur est supposé voir à travers la vitre de protection (12) et qui ne se trouvent en réalité pas sur un côté de la vitre de protection (12) opposé au conducteur, mais se trouvent en réalité sur le côté de la vitre de protection (12) tourné vers le conducteur ;
monter (S12) un dispositif d'éclairage (14) dans ou sur le bus (20) dans une zone latérale avant du bus (20) ; et
orienter (S14) le dispositif d'éclairage (14) de sorte qu'une zone d'éclairage (26) à l'extérieur du bus (20) est éclairée, laquelle zone d'éclairage est positionnée derrière un bord avant (32) du bus (20) dans la direction de déplacement (28) et est latéralement adjacente à la zone d'embarquement (33), et chevauche la partie d'un champ de vision (35) du conducteur que le conducteur voit à travers la vitre de protection (12) lorsque le conducteur est dans une position de conduite et d'assise (18), dans lequel la zone d'éclairage (26) générée par le dispositif d'éclairage (14) agit de sorte qu'une lumière suffisante est projetée depuis l'extérieur sur la vitre de protection (12), de sorte que des réflexions sur le côté de la vitre de protection (12) tourné vers le conducteur sont réduites et qu'une illusion d'optique provoquée par les réflexions est ainsi considérablement réduite et, au mieux, éliminée.
